# EUROPEAN PATENT APPLICATION

(11) **EP 1 331 774 A2**
(43) Date of publication of application: **30.07.2003**
(21) Application number: 02026587.2
(22) Date of filing: 28.11.2002
(51) Int. Cl.: H04L 12/64

(54) **Communication apparatus with dial-up function**

(30) Priority: 24.01.2002 JP 2002015876
(71) Applicant: Kabushiki Kaisha Toshiba, Tokyo (JP)
(72) Inventor: Koyanagi, Atsushi, c/o Kabushiki Kaisha Toshiba, Tokyo 105-8001 (JP); Kaji, Koichi, c/o Kabushiki Kaisha Toshiba, Tokyo 105-8001 (JP)
(74) Representative: Henkel, Feiler, Hänzel

(57) **Abstract**

This invention provides a communication apparatus with a dial-up function that can bridge-connect a client device to a WAN at an arbitrary timing with arbitrary settings (telephone number and the like) without changing router settings. This invention relates to a communication apparatus (100) which can dial-up-connect a client (110-1) to a server at a connection destination via a WAN interface on the basis of information representing the server at the connection destination from the client (120) connected to a LAN interface.

## Description

The present invention relates to a communication apparatus with a dial-up function.

An ISDN (Integrated Services Digital Network) router or a router with an analog modem function has a port for connection to an ISDN line or analog line on the WAN (Wide Area Network) side, and a port for connection to the Ethernet, USB (Universal Serial Bus), wireless LAN, and the like on the LAN (Local Area Network) side. The router has a WAN-LAN routing function.

In this case, the router is connected to an ISDN line or analog line by setting connection conditions such as a telephone number in the router in advance. The router dial-up-connects the WAN to the ISDN or analog line, if necessary.

More specifically, the router checks on the basis of the IP of a packet to be routed whether the packet is to be routed to the LAN or WAN side. If the router determines that the packet is to be routed to the WAN side, it is dial-up-connected to the WAN. In other words, a LAN-side client cannot allow the router to dial-up-connect an arbitrary connection destination at an arbitrary timing.

Some products disable the use of the router function, use them as TAs (Terminal Adapters), and can dial-up-connects clients to arbitrary connection destinations at arbitrary timings. In this case, such product is connected to a client by an RS-232C cable.

In the prior art, when a LAN-side client device is connected to a router (gateway) via the Ethernet or wireless LAN, the device cannot be connected to an in-house LAN from the Internet. If connection from the in-house LAN to the Internet is limited, the device must be dial-up-connected to an ISP (Internet Service Provider) access point in connection to the Internet, or to an office RAS (Remote Access Server) in connection to the in-house LAN. Setting information of the connection method (telephone number and the like) of the router must be cumbersomely changed every connection.

The prior art cannot meet demands for always connecting a client device via a router in connection to the Internet, and when the device is to be connected to an in-house LAN, temporarily connecting the device to a remote access server as a bridge.

The LAN-side client does not install a protocol which emulates an RS-232C serial port in LAN connection (e.g., Ethernet). The LAN-side client cannot be dial-up-connected to the telephone number of an arbitrary connection destination at an arbitrary timing.

The connection method must be changed as follows. An analog modem or TA (Terminal Adapter) is connected to the RS-232C serial port of a PC or an analog line is connected to a PC-DSLAM.

When the client is to be dial-up-connected to an arbitrary connection destination at an arbitrary timing by using a router as a TA, the router and client are connected by an RS-232C cable. This makes it impossible to dial-up-connect an arbitrary one of a plurality of clients to the arbitrary connection destination.

The present invention has been made to overcome the conventional drawbacks, and may provide a communication apparatus with a dial-up function that allows bridge connection for a client device to a WAN at an arbitrary timing with arbitrary settings (telephone number and the like) without changing router settings.

According to a first aspect of the present invention, there is provided a communication apparatus with a dial-up function, comprising a first interface which can connect a communication terminal, a second interface which is connected to a plurality of dial-up-connectable servers, and connection means, when a connection request to a server connected to the second interface is received from the communication terminal connected to the first interface, configured to connect the communication terminal to the server at a connection request destination via the second interface on the basis of information representing the server at the connection request destination sent from the communication terminal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an arrangement example when a PPPoE is used for ADSL (Asymmetric Digital Subscriber Line) Internet connection;
FIG. 2 is a view showing the structure of a PPPoE data link frame;
FIG. 3 is a view showing the structure of a tag contained in a PPPoE payload;
FIG. 4 is a view showing the PPPoE payload of a PPP session stage;
FIG. 5 is a flow chart for explaining the operation of a discovery stage;
FIG. 6 is a block diagram showing a communication apparatus according to the first embodiment of the present invention;
FIG. 7 is a view showing an example of constituting a system by using a communication apparatus 100 according to the first embodiment of the present invention;
FIG. 8 is a view showing the structure of a PPP data link frame;
FIG. 9 is a view showing the structure of a PPPoE data link frame in the PPP session stage;
FIG. 10 is a view for explaining the connection, communication, and disconnection sequences of the communication apparatus according to the first embodiment of the present invention;
FIG. 11 is a block diagram showing the arrangement of a communication apparatus according to the second embodiment of the present invention;
FIG. 12 is a view showing an example of constituting a system by using a communication apparatus 200 according to the second embodiment of the present invention;
FIG. 13 is a logical block diagram for explaining the function of a router mode;
FIG. 14 is a logical block diagram for explaining the function of a bridge mode;
FIG. 15 is a block diagram showing the arrangement of a communication apparatus according to the third embodiment of the present invention;
FIG. 16 is a view showing an example of constituting a system by using the communication apparatus according to the third embodiment of the present invention;
FIG. 17 is a logical block diagram for explaining the function of a router mode;
FIG. 18 is a logical block diagram for explaining the function of a router/bridge mode;
FIG. 19 is a block diagram showing the arrangement of a communication apparatus according to the fourth embodiment of the present invention;
FIG. 20 is a view showing an example of constituting a system by using the communication apparatus according to the fourth embodiment of the present invention;
FIG. 21 is a logical block diagram in the router mode when both WAN_A and WAN_B are WAN interfaces (TAs);
FIG. 22 is a logical block diagram in the bridge mode when both WAN_A and WAN_B are WAN interfaces (TAs) 401-2;
FIG. 23 is a logical block diagram in the router mode when WAN_A is the WAN interface 401-2 and WAN_B is a WAN interface 401-3 (ADSL modem); and
FIG. 24 is a logical block diagram in the router/bridge mode when WAN_A is the WAN interface 401-2 and WAN_B is the WAN interface 401-3 (ADSL modem).

PPPoE adopted in the present invention will be explained.

PPP (Point to Point Protocol, RFC 1661) is a protocol for transferring multi-protocol datagram onto a link which is connected by a telephone line or the like in a one-to-one correspondence. PPPoE (Point to Point Protocol over Ethernet, RFC 2516) is a protocol for executing PPP transfer on the Ethernet in which one transmission path is shared by a plurality of terminals (in practice, PPPoE can be used in an IEEE 802.11 wireless LAN in addition to the Ethernet).

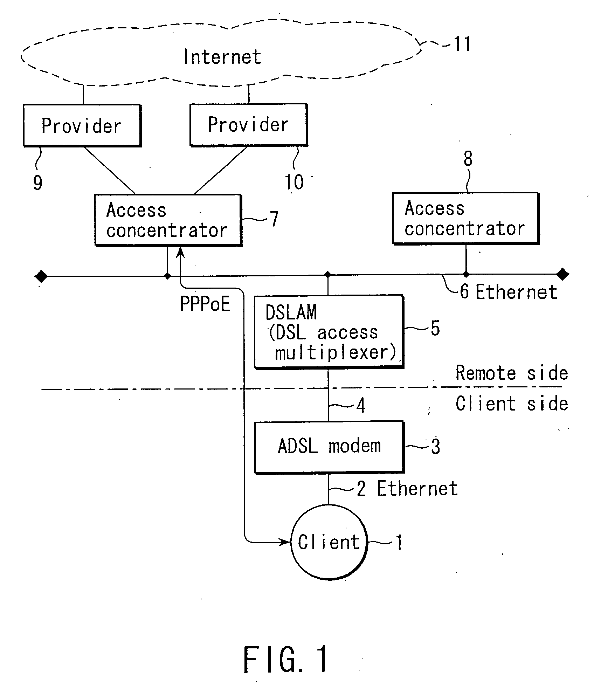

FIG. 1 shows an arrangement example when PPPoE is used for ADSL (Asymmetric Digital Subscriber Line) Internet connection.

As shown in FIG. 1, a client 1 is connected to an Ethernet 6 via an Ethernet 2, ADSL modem 3, telephone line 4, and DSL access multiplexer (DSLAM) 5. The Ethernet 6 is connected to access concentrators (servers) 7 and 8, and to Internet 11 via the access concentrator 7 and a provider 9 or 10.

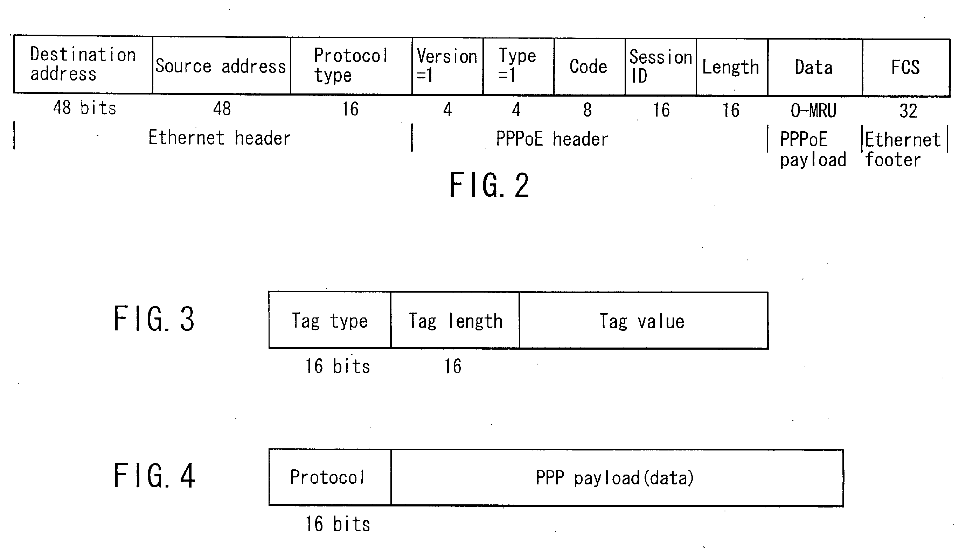

PPPoE has two different stages: discovery stage and PPP session stage. When a client starts the PPPoE stage, it first executes the discovery stage to search for all access concentrators (servers) in the same network, and establishes a PPPoE session with one of them. Upon the completion of the discovery stage, the client advances to the PPP session stage of performing PPP communication. FIG. 2 is a view showing the structure of a PPPoE data link frame.

In FIG. 2, "protocol type" is 8863h for the discovery stage and 8864h for the session stage.

"Code" represents the type of packet in the discovery stage. 09h represents a PADI (PPPoE Active Discovery Initiator) packet; 07h, a PADO (PPPoE Active Discovery Offer) packet; 19h, a PADR (PPPoE Active Discovery Request) packet; 65h, a PADS (PPPoE Active Discovery Session-confirmation) packet; and a7h, a PADT (PPPoE Active Discovery Terminate) packet. Code "00h" represents the PPP session stage.

"Session ID" is sent from an access concentrator to a client, and used in the PPP session stage.

As shown in FIG. 3, the PPPoE payload of the discovery stage contains 0 or a plurality of tags. One tag is made up of the type, length, and value, and defined as follows. "Tag type" represents the type of tag. For example, 0101h represents a Service-Name tag; and 0102h, an AC-Name tag.

FIG. 4 shows the PPPoE payload of the PPP session stage. The protocol and PPP payload are the same as those used in a PPP data link frame.

An example of the PPPoE connection and disconnection sequences will be described.

When a client is to start the PPPoE stage, the client first executes the discovery stage in order to identify the Ethernet MAC address of a peer and establish a PPPoE session ID.

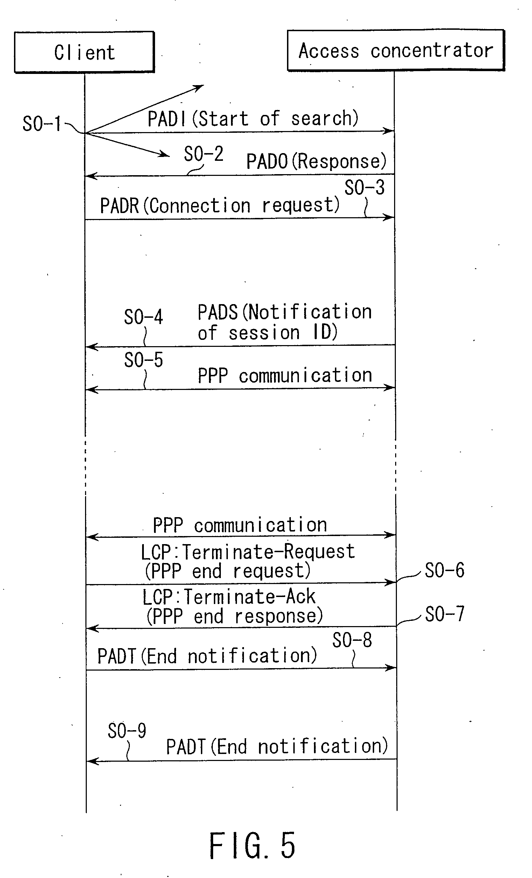

The operation of the discovery stage will be explained with reference to the timing chart of FIG. 5.

To search for an access concentrator, the client broadcasts a PADI (PPPoE Active Discovery Initiator) packet (S0-1). At this time, a requested service name can be set in the Service-Name tag, but the Service-Name tag is generally null.

In S0-2, the access concentrator unicasts (to be simply referred to as "transmit" hereinafter) a PADO (PPPoE Active Discovery Offer) packet as a response to the client.

The client transmits a PADR (PPPoE Active Discovery Request) packet as a PPP connection request (S0-3). (In this case, the remote side has only one access concentrator which responds to the PADI, but when the client receives a plurality of PADO packets, it selects one access concentrator to be connected.)

The access concentrator generates a session ID and transmits a PADS (PPPoE Active Discovery Session-confirmation) packet (S0-4). After that, the discovery stage ends.

The client and access concentrator perform PPP communication (S0-5: PPP session stage).

Disconnection operation will be described.

The client transmits Terminate-Request by a PPP LCP (Link Control Protocol) packet as an end request (S0-6).

The access concentrator transmits Terminate-Ack by a PPP LCP packet as an end acknowledgement to end the PPP session (S0-7).

The client ends the PPP session and transmits a PADT (PPPoE Active Discovery Terminate) packet to end the PPPoE session (S0-8).

The access concentrator transmits a PADT (PPPoE Active Discovery Terminate) packet to end the PPPoE session (S0-9).

### <First Embodiment: Case in which WAN Interface Is One Bridge Device>

A communication apparatus according to the first embodiment of the present invention will be described.

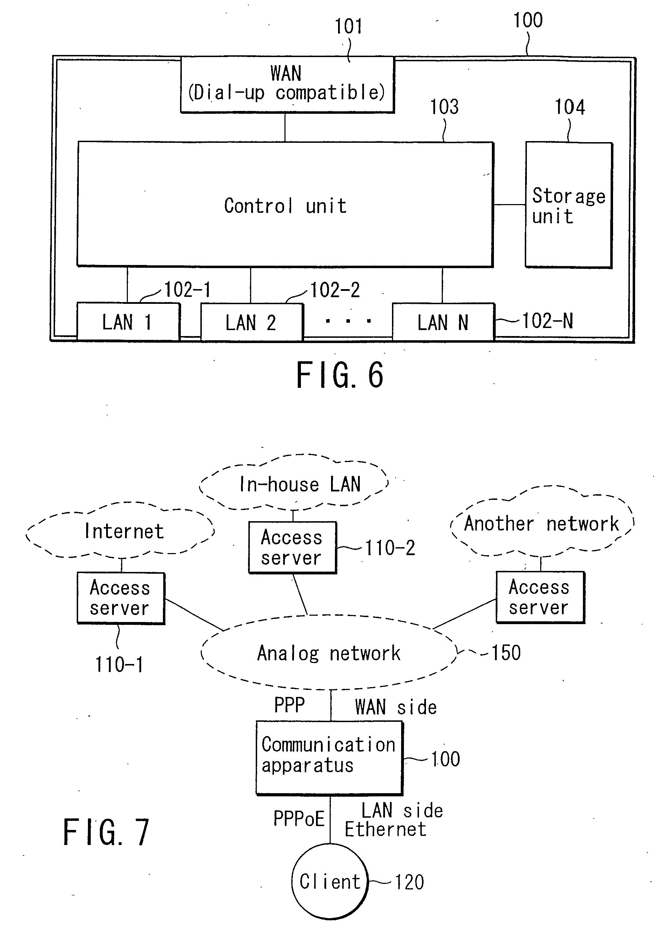

FIG. 6 is a block diagram showing the communication apparatus according to the first embodiment of the present invention.

As shown in FIG. 6, a communication apparatus 100 according to the first embodiment is a bridge device having one dial-up-connectable WAN interface 101 such as an analog modem, TA (Terminal Adapter), or RS-232C interface, and LAN interfaces 102-1 to 102-N such as an Ethernet interface, wireless LAN interface, and the like.

A control unit 103 controls dial-up connection of the WAN interface 101, relays packets between the LAN interfaces 102-1 to 102-N, and relays packets between the LAN and the WAN. A storage unit 104 stores information necessary to control or relay the interfaces.

FIG. 7 is a view showing an example of constituting a system by using the communication apparatus 100 according to the first embodiment of the present invention. In FIG. 7, the communication apparatus 100 has one LAN interface 102 which is an Ethernet device, and the dial-up-connectable WAN interface 101 is an analog modem.

The analog modem 101 can be connected to an ISP (Internet Service Provider) remote access server 110-1, in-house LAN remote access server 110-2, and the like via an analog line 150. The Ethernet interface 102 is connected to a client 120 via an Ethernet cable.

The communication apparatus has a PPPoE access concentrator function. A client is connected to the communication apparatus by using a PPPoE, and the communication apparatus is connected to a remote access server by using dial-up connection (line connection and PPP connection).

That is, communication is performed using the PPPoE between the client and the communication apparatus, and the PPP between the communication apparatus and the remote access server. To connect the client and remote access server, the communication apparatus mutually converts and relays the PPPoE and PPP packets.

In the normal PPPoE, one remote access server (access concentrator) communicates with one client via the discovery stage and PPP session stage. A client in the present invention communicates with the communication apparatus in the discovery stage and the remote access server in the PPP session stage. For this purpose, the communication apparatus establishes dial-up connection with the remote access server during the discovery stage.

The communication apparatus performs dialing, so that the client must notify the communication apparatus of the telephone number of a connection destination. This is achieved by setting telephone number information in the Service-Name tag.

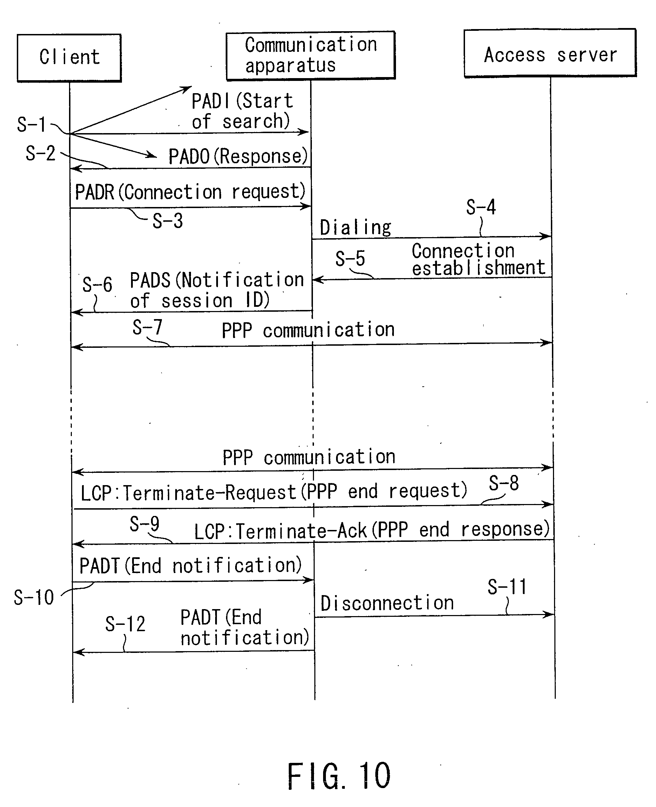

The connection, communication, and disconnection sequences of the communication apparatus according to the first embodiment of the present invention will be explained with reference to FIG. 10.

To search for the communication apparatus, the client sets the telephone number of a remote access server at a connection destination in the Service-Name tag, and broadcasts a PADI (PPPoE Active Discovery Initiator) packet (S-1).

In S-2, the communication apparatus unicasts (to be simply referred to as "transmit" hereinafter) a PADO (PPPoE Active Discovery Offer) packet as a response to the client.

The client transmits a PADR (PPPoE Active Discovery Request) packet as a PPP connection request (S-3). The communication apparatus dials the remote access server at the connection destination via a WAN interface (analog modem) by using the received telephone number (S-4), thereby establishing line connection with the remote access server (S-5).

The communication apparatus generates a session ID and transmits a PADS (PPPoE Active Discovery Session-confirmation) packet (S-6). Then, the discovery stage ends, and the processing shifts to the PPP session stage.

The client and remote access server communicate with each other by the PPP via the communication apparatus (S-7). In the PPP session stage, the communication apparatus only mutually converts (to be described later) and transfers PPPoE and PPP packets.

Disconnection operation will be described.

The client transmits Terminate-Request by a PPP LCP packet as an end request (S-8). The remote access server transmits Terminate-Ack by a PPP LCP packet as an end acknowledgement to end the PPP session (S-9).

The client ends the PPP session and transmits a PADT (PPPoE Active Discovery Terminate) packet to end the PPPoE session (S-10). Thereafter, the communication apparatus disconnects the line (S-11).

The communication apparatus transmits a PADT (PPPoE Active Discovery Terminate) packet to end the PPPoE session (S-12).

A method of mutually converting PPP and PPPoE packets in the PPP session stage will be described.

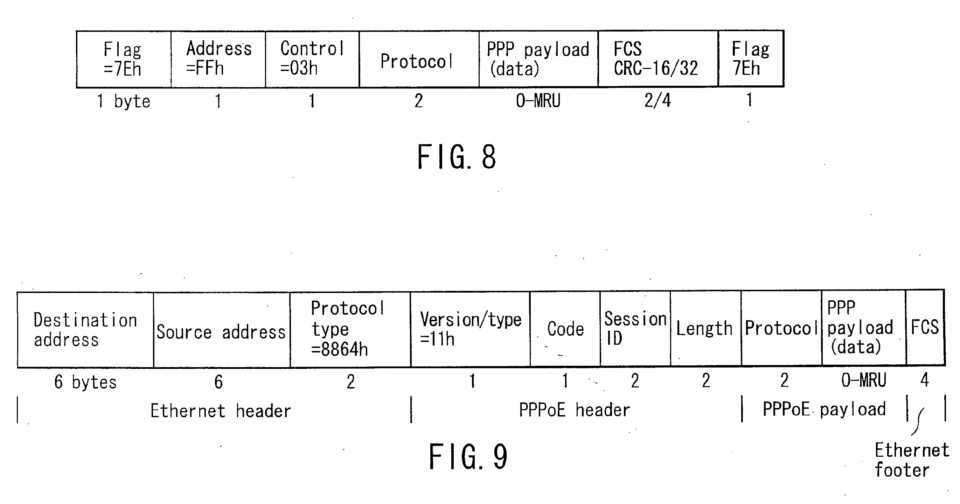

As the mutual PPP/PPPoE (session stage) packet conversion method, an example using the PPPoE in the Ethernet will be explained. FIG. 8 shows the structure of a PPP data link frame, and FIG. 9 shows the structure of a PPPoE data link frame in the PPP session stage.

### <LAN → WAN>

A packet is transferred from the LAN to the WAN as follows.

Upon reception of a packet of a protocol type "8864h" from the LAN-side port, the communication apparatus determines that the packet is one in the PPPoE session stage. The communication apparatus checks the session ID to confirm that the session ID has the same value as that sent from the communication apparatus by a PADS packet.

Then, the communication apparatus converts the packet. The communication apparatus checks an FCS to confirm that the data frame is correct. The communication apparatus extracts a PPPoE payload (protocol and PPP payload), and adds a flag (= 7Eh), address (= FFh), and control (= 03h) necessary for the PPP to the header of the PPP. The communication apparatus recalculates the FCS, adds it to the end of the PPP, and transmits the resultant packet to the WAN side.

### <WAN → LAN>

A packet is transferred from the WAN to the LAN as follows.

Upon reception of a PPP packet from the WAN side, the communication apparatus checks an FCS to confirm that the data frame is correct. The communication apparatus extracts a protocol and PPP payload from the PPP packet, and adds a version (= 1), type (= 1), code (= 0), session ID, and length necessary for the PPPoE to the header of the PPPoE. The communication apparatus recalculates the FCS, and adds it to the end of the PPPoE. The communication apparatus sets the resultant packet in an Ethernet MAC frame (for the Ethernet, Ethernet header and footer are added), and transmits the frame. As the session ID, one sent to the client in the discovery stage is used. The protocol type is 8864h.

This protocol conversion enables communication in the PPP session stage.

The communication apparatus according to the first embodiment can select an arbitrary remote access server on the basis of an instruction from a client, and dial-up-connect the client to the remote access server without setting any connection method in the communication apparatus in advance. An LCP/NCP (Network Control Protocol) negotiation can also be directly communicated between the client and the remote access server.

The client is connected as if it were PPPoE-connected to the remote access server. Hence, conventional PPPoE client software can be applied to WAN connection.

The remote access server is connected as if it were dial-up-connected to the client. The client can, therefore, communicate with a conventional remote access server without any special setting.

Even a client device having no dial-up connection interface (analog modem, TA, RS-232C interface, or the like) can be dial-up-connected as far as it has a LAN interface (Ethernet, wireless LAN, or the like).

### <Second Embodiment: Case in which One WAN Interface with Router/Bridge Switching Function Is Used>

A communication apparatus according to the second embodiment of the present invention will be described.

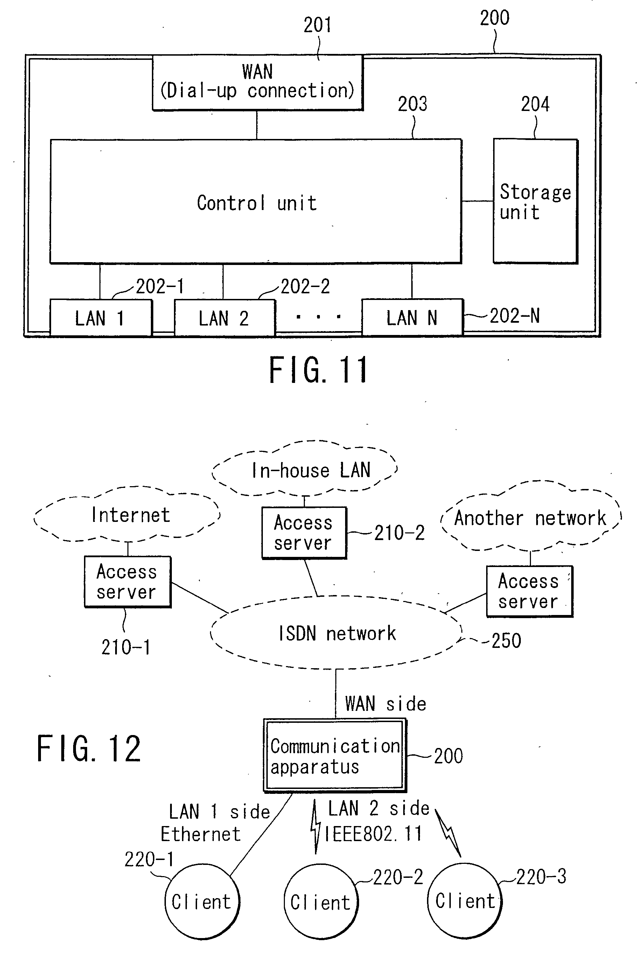

FIG. 11 is a block diagram showing the communication apparatus according to the second embodiment of the present invention.

As shown in FIG. 11, a communication apparatus 200 is a router having one dial-up-connectable WAN interface 201 such as an analog mode, TA (Terminal Adapter), or RS-232C interface, and LAN interfaces 202-1 to 202-N such as an Ethernet interface, wireless LAN interface, and the like. A control unit 203 controls dial-up connection of the WAN interface, relays packets between the LAN interfaces, and relays and routes packets between the LAN and the WAN. A storage unit 204 stores information necessary for routing and filtering.

FIG. 12 is a view showing an example of constituting a system by using the communication apparatus 200 according to the second embodiment of the present invention. As shown in FIG. 12, the communication apparatus 200 has two LAN interfaces.

The dial-up-connectable WAN interface 201 is a TA and can be connected to an ISP (Internet Service Provider) remote access server 210-1, in-house LAN remote access server 210-2, and the like via an ISDN line 250.

The LAN interface 202-1 is an Ethernet interface and is connected to a client 220-1 via an Ethernet cable. The LAN interface 202-2 is an IEEE 802.11 wireless LAN interface and is wirelessly connected to two clients 220-2 and 220-3.

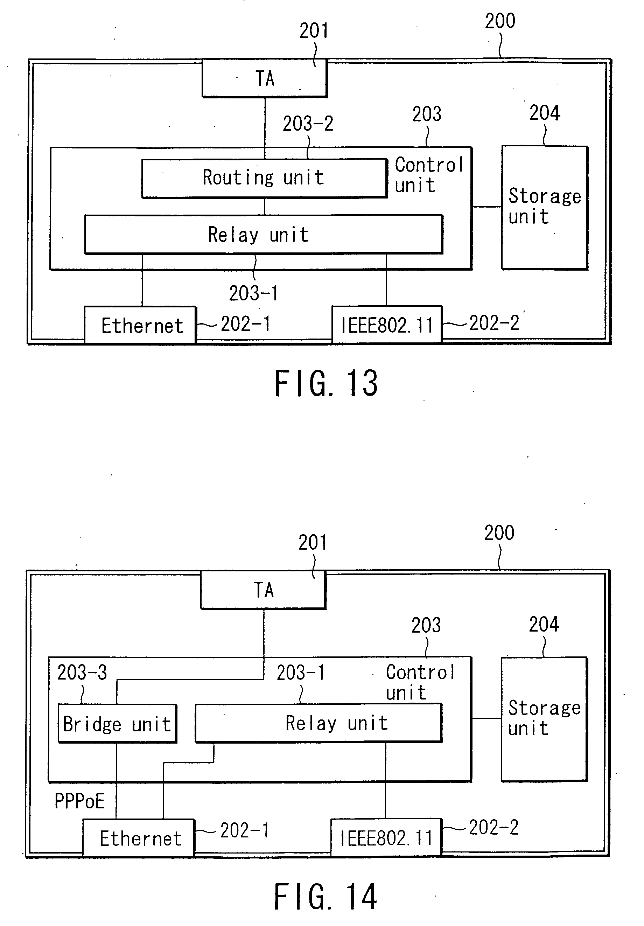

The communication apparatus has two, router and bridge modes. In a normal state, the communication apparatus operates in the router mode. FIG. 13 is a logical block diagram for explaining the function of the router mode, and FIG. 14 is a logical block diagram for explaining the function of the bridge mode.

In the router mode, a relay unit 203-1 relays packets between the LAN interfaces. If necessary, a routing unit 203-2 performs dial-up connection to a remote access server via a WAN interface to route packets between the LAN interface and the WAN interface.

When the communication apparatus receives a PPPoE connection request (packet of a protocol type "8863h") from an arbitrary client, the apparatus shifts to the bridge mode via the PPPoE discovery stage.

In the bridge mode, the relay unit 203-1 relays packets between the LAN interfaces, but the routing unit stops its function. Similar to the first embodiment, a bridge unit 203-3 dial-up-connects the communication apparatus to a remote access server by using the WAN interface 201. The bridge unit 203-3 converts a PPPoE packet received from the LAN interface into a PPP packet, and relays the PPP packet to the WAN interface (to the contrary, converts a PPP packet received from the WAN interface into a PPPoE packet, and relays the PPPoE packet to the LAN interface).

FIG. 14 shows an example in which the Ethernet interface 202-1 and TA 201 are bridge-connected to each other. A packet transferred from the LAN interface 202-1 to the bridge unit 203-3 is only a PPPoE packet (packets of protocol types "8863h" and "8864h"), and other packets are transferred to the relay unit 203-1. In FIG. 14, the Ethernet interface 202-1 and control unit 203 are connected by two lines in order to explain a logical function, but are physically connected by one line. After PPP connection is canceled, the communication apparatus returns to the router mode.

The connection, communication, and disconnection sequences of the communication apparatus according to the second embodiment of the present invention will be explained with reference to FIG. 10.

The operation of the communication apparatus according to the second embodiment of the present invention is basically the same as that of the first embodiment, and only a difference will be described.

The communication apparatus according to the first embodiment is not intended for the router function. If a client issues a PPP connection request, the communication apparatus executes dial-up connection in S4 by using a telephone number received from the client.

To the contrary, the communication apparatus according to the second embodiment stops routing operation upon reception of a PADR packet as a PPP connection request from the client. When dial-up connection to the WAN side has been established, the communication apparatus temporarily cancels it and shifts from the router mode to the bridge mode. The communication apparatus dials a remote access server from the WAN interface by using the received telephone number, and performs line connection.

The communication apparatus according to the second embodiment transmits a PADT (PPPoE Active Discovery Terminate) packet in S-12. After the PPPoE session ends, i.e., disconnection processing is completed, the communication apparatus shifts to the router mode. If necessary, the communication apparatus performs dial-up connection in the router mode again.

The communication apparatus of the second embodiment can be used as a dial-up router in a normal state, and if necessary, directly dial-up-connect a client to another remote access server. The communication apparatus is very convenient particularly when a notebook model PC with a wireless LAN function is to be connected to both the Internet and an in-house LAN.

This communication apparatus realizes such a use form that the PC is always connected to the Internet via a FLET'S ISDN or the like in a normal state such as home use, and dial-up-connected to the in-house LAN as needed.

### <Third Embodiment: Case in which Two WAN Interfaces Are Used and Both Router Function and Bridge Function Can Be Adapted>

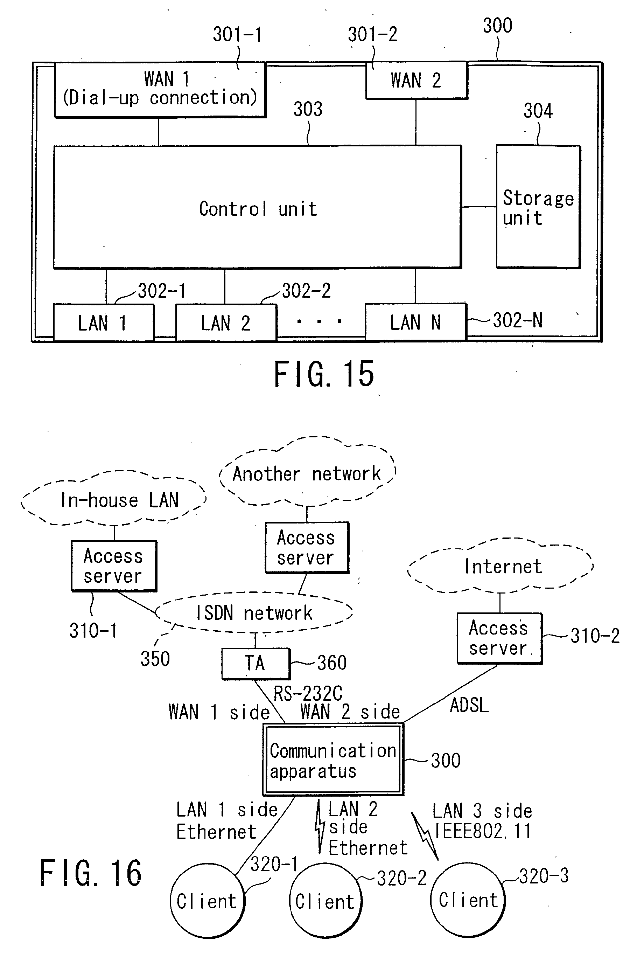

FIG. 15 is a block diagram showing the arrangement of a communication apparatus according to the third embodiment of the present invention.

As shown in FIG. 15, a communication apparatus 300 according to the third embodiment is a router having two WAN interfaces 301, and one or a plurality of LAN interfaces 302 such as an Ethernet interface, wireless LAN interface, and the like.

One of the WAN interfaces 301 is a dial-up-connectable WAN interface such as an analog modem, TA (Terminal Adapter), RS-232C interface, or the like. The other is a WAN interface connectable to an ADSL, cable television, ISDN dedicated line, or the like (or may be a dial-up-connectable WAN interface).

A control unit 303 controls dial-up connection of the WAN interface, relays packets between the LAN interfaces, and relays and routes packets between the LAN and the WAN. A storage unit 304 stores information necessary for routing and filtering.

FIG. 16 is a view showing an example of constituting a system by using the communication apparatus 300. In the third embodiment, the communication apparatus 300 has three LAN interfaces. A WAN interface 301-1 is an RS-232C interface, and can be connected to an in-house LAN remote access server 310-1 or the like via a TA 360 and ISDN line 350.

A WAN interface 301-2 is an ADSL modem and is always connected to an ISP (Internet Service Provider) remote access server 310-2 via a telephone line. Both LAN interfaces 302-1 and 302-2 are Ethernet interfaces, and are respectively connected to clients 320-1 and 320-2 via Ethernet cables. A LAN interface 302-3 is an IEEE 802.11 wireless LAN interface and is wirelessly connected to a client 320-3.

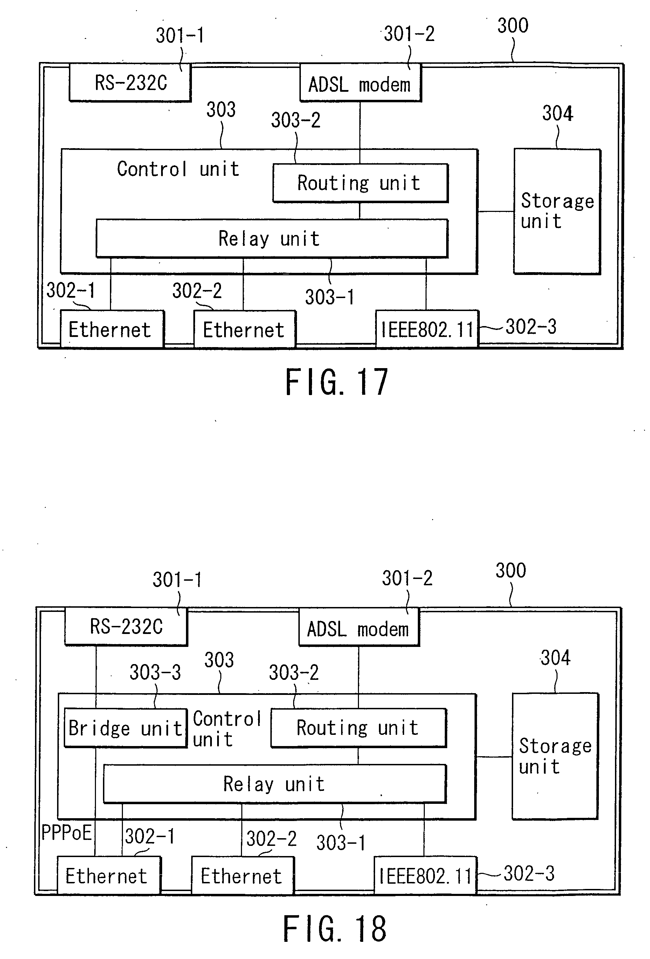

The communication apparatus has two, router and router/bridge modes. In a normal state, the communication apparatus operates in the router mode. FIG. 17 is a logical block diagram for explaining the function of the router mode, and FIG. 18 is a logical block diagram for explaining the function of the router/bridge mode.

In the router mode, the communication apparatus uses not the WAN interface (RS-232C) 301-1 but only the WAN interface (ADSL modem) 301-2. A relay unit 303-1 relays packets between the LAN interfaces, and a routing unit 303-2 routes packets between the LAN interface and the WAN interface (ADSL modem) 301-2.

When the communication apparatus receives a PPPoE connection request (packet of a protocol type "8863h") from an arbitrary client, the apparatus shifts to the router/bridge mode via the PPPoE discovery stage.

In the router/bridge mode, in addition to the router mode, a bridge unit 303-3 dial-up-connects the communication apparatus to a remote access server by using the TA 360 via the RS-232C interface 301-1, similar to the first embodiment. The bridge unit 303-3 converts a PPPoE packet received from the LAN interface into a PPP packet, and relays the PPP packet to the WAN interface. To the contrary, the bridge unit 303-3 converts a PPP packet received from the WAN interface into a PPPoE packet, and relays the PPPoE packet to the LAN interface.

FIG. 18 shows an example in which the Ethernet interface 302-1 and RS-232C interface 301-1 are bridge-connected to each other. A packet transferred from the LAN interface 302-1 to the bridge unit 303-3 is only a PPPoE packet (packets of protocol types "8863h" and "8864h"), and other packets are transferred to the relay unit 303-1.

In FIG. 18, the Ethernet interface 302-1 and control unit 303 are connected by two lines in order to explain a logical function, but are physically connected by one line. After PPP connection is canceled, the communication apparatus returns to the router mode.

A shift from the router mode to the router/bridge mode, and connection, communication, and disconnection sequences in the router/bridge mode will be explained with reference to FIG. 10.

The operation of the communication apparatus according to the third embodiment of the present invention is basically the same as that of the first embodiment, and only a difference will be described.

The communication apparatus according to the first embodiment is not intended for the router function. If a client issues a PPP connection request, the communication apparatus executes dial-up connection in S4 by using a telephone number received from the client.

To the contrary, the communication apparatus according to the third embodiment shifts from the router mode to the router/bridge mode upon reception of a PADR packet as a PPP connection request from the client. The communication apparatus dials a remote access server from the WAN interface (RS-232C interface) 301-1 by using the received telephone number, and performs line connection.

The communication apparatus according to the third embodiment transmits a PADT (PPPoE Active Discovery Terminate) packet in S-12. After the PPPoE session ends, i.e., disconnection processing is completed, the communication apparatus shifts to the router mode.

The communication apparatus of the third embodiment can be used as a broadband router in a normal state, and if necessary, directly dial-up-connect a client to another remote access server. The communication apparatus is very convenient especially when a notebook model PC with a wireless LAN function is to be connected to both the Internet and an in-house LAN.

This communication apparatus realizes such a use form that the PC is always connected to the Internet via an ADSL, cable television, or the like in a normal state such as home use, and dial-up-connected to the in-house LAN as needed.

### <Fourth Embodiment: Case in which Two or More WAN Interfaces Can Be Selected and Both Router Function and Bridge Function Can Be Adapted>

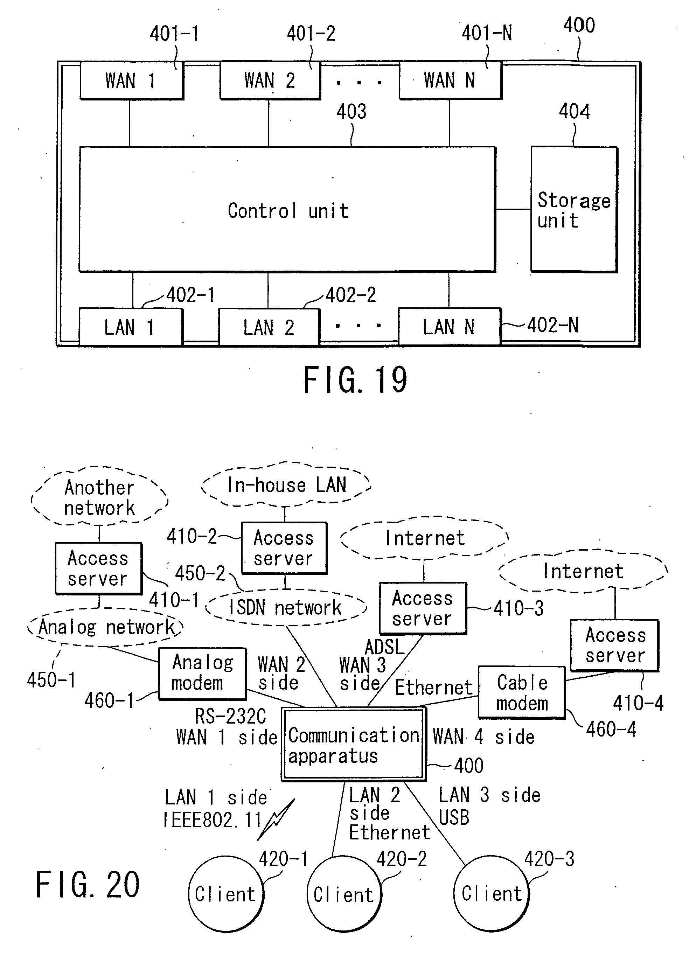

FIG. 19 is a block diagram showing the arrangement of a communication apparatus according to the fourth embodiment of the present invention.

As shown in FIG. 19, a communication apparatus 400 according to the fourth embodiment of the present invention is a router having two or more WAN interfaces 401, and one or a plurality of LAN interfaces 402 such as an Ethernet interface, wireless LAN interface, and the like.

At least one of the WAN interfaces 401 is a dial-up-connectable WAN interface such as an analog modem, TA (Terminal Adapter), RS-232C interface, or the like.

A control unit 403 controls dial-up connection of the WAN interface, relays packets between the LAN interfaces, and relays and routes packets between the LAN and the WAN.

A storage unit 404 stores information necessary for routing and filtering in addition to the following setting information:
1. Information representing which of dial-up-connectable WAN interfaces is used for dial-up connection upon reception of a PPPoE connection request from a client (the set WAN interface will be called WAN_A).
2. Information representing which of WAN interfaces is used for routing with the LAN (the set WAN interface will be called WAN_B)

The control unit 403 executes packet routing/relay and dial-up connection on the basis of these pieces of setting information. The use of WAN interfaces except WAN_A and WAN_B is stopped.

FIG. 20 is a view showing an example of constituting a system by using the communication apparatus according to the fourth embodiment of the present invention.

As shown in FIG. 20, the communication apparatus 400 according to the fourth embodiment of the present invention has two dial-up-connectable WAN interfaces, two other WAN interfaces, and three LAN interfaces.

A dial-up-connectable WAN interface 401-1 is an RS-232C interface, and can be connected to a remote access server 410-1 via an analog modem 460-1 and analog line 450-1.

A dial-up-connectable WAN interface 401-2 is a TA and can be connected to a remote access server 410-2 via an ISDN line 450-2.

A WAN interface 401-3 is an ADSL modem and is always connected to a remote access server 410-3 via a telephone line. A WAN interface 401-4 is an Ethernet interface and is always connected to a remote access server 410-4 of a cable television company via a cable modem 460-4.

A LAN interface 402-1 is an IEEE 802.11 wireless LAN and is wirelessly connected to a client 420-1. A LAN interface 402-2 is an Ethernet interface and is connected to a client 420-2 via an Ethernet cable. A LAN interface 402-3 is a USB interface and is connected to a client 420-3 via a USB cable.

Under these conditions, dial-up-connectable WAN interfaces are the WAN interfaces 401-1 and 401-2, and WAN_A is selected from them. WAN_B is selected from the four WAN interfaces 401-1 to 401-4.

If WAN_A and WAN_B are identical WAN interfaces, only one WAN Interface is used. Thus, the router and bridge modes are switched in accordance with a PPPoE connection request, similar to the second embodiment.

If WAN_A and WAN_B are different WAN interfaces, two WAN Interfaces can be used. The router and router/bridge modes are switched in accordance with a PPPoE connection request, similar to the third embodiment.

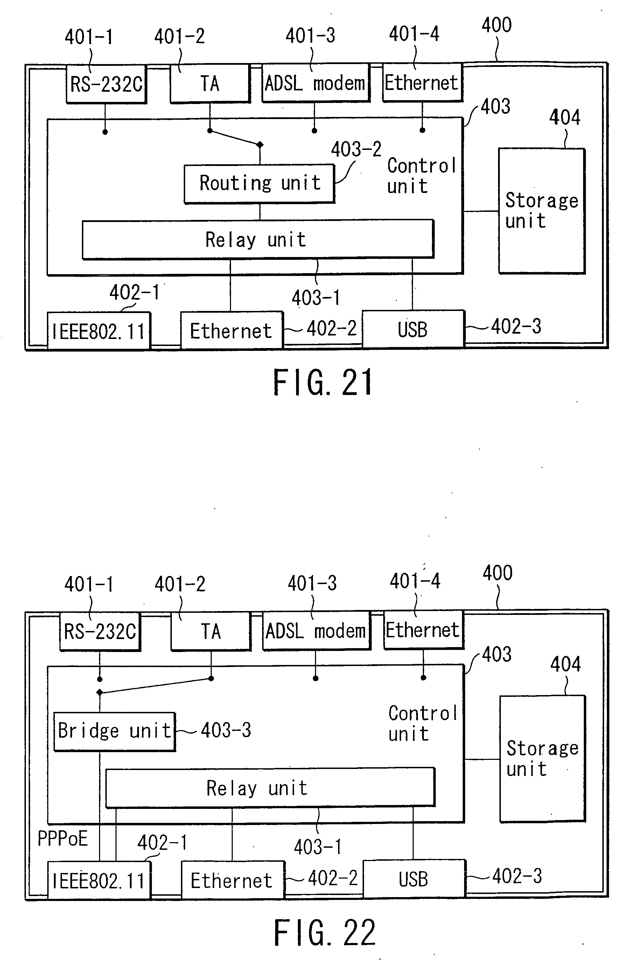

FIG. 21 is a logical block diagram in the router mode when both WAN_A and WAN_B are the WAN interfaces (TA) 401-2. FIG. 22 is a logical block diagram in the bridge mode.

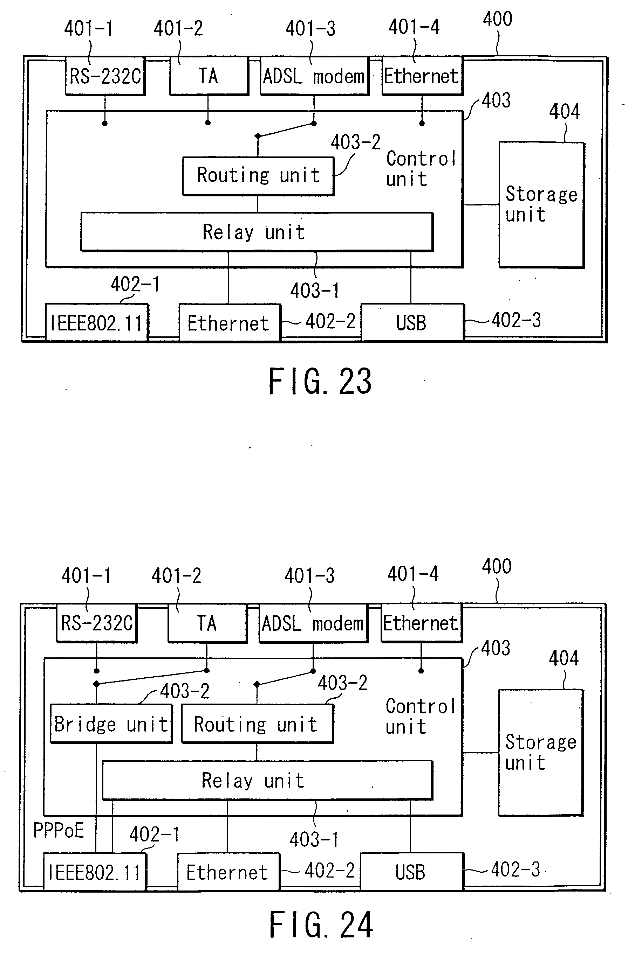

FIG. 23 is a logical block diagram in the router mode when WAN_A is the WAN interface 401-2 and WAN_B is the WAN interface 401-3 (ADSL modem). FIG. 24 is a logical block diagram in the router/bridge mode.

Connection, communication, and disconnection operations upon reception of a PPPoE connection request, and a packet conversion method are the same as those in the second and third embodiments, and a description thereof will be omitted.

The communication apparatus of the fourth embodiment can freely set a WAN interface to be router-connected to the LAN and a WAN interface to be bridge-connected to the LAN.

### <Other Modifications>

In the above-described embodiments, a telephone number to be dialed is sent by the Service-Name tag. Alternatively, the telephone number may be designated by the alphabet or the like instead of directly designating it in Service-Name. In this case, a correspondence table of service names and telephone numbers is set in the communication apparatus, and searched for a target telephone number.

Alternatively, Service-Name may be kept null, and a default telephone number may be set and used in the communication apparatus.

Since RFC 2516 describes only PPPoE in a case in which a PPP packet is transmitted "by the Ethernet", mutual conversion of PPP and PPPoE has been exemplified for the Ethernet in the PPPoE data link frame. However, PPPoE can also be properly used in an IEEE 802.11 wireless LAN. In this case, an IEEE 802.2 SNAP data frame is used, and PPPoE can be used by an IEEE 802.2 device. Usable LAN devices in addition to an IEEE 802.11 device are a token bus, token ring, FDDI, Bluetooth, and the like.

The communication apparatus may transmit an Echo_Request packet to a client at any time in the PPP session stage of PPPoE in order to confirm whether a link with the client has been established. In this case, Echo_Reply from the client is not transferred to the WAN side. When Echo_Request is received from the WAN side (no Echo_Request is generally received in the case of a telephone line), the communication apparatus sends back Echo_Reply. To cope with this function, the communication apparatus must check every PPP packet (PPPoE packet in the PPP session stage) which is simply converted and transferred in the above embodiments.

More specifically, the control unit of the communication apparatus comprises an Echo_Request packet transmission unit and packet check unit. The Echo_Request packet transmission unit transmits an Echo_Reply packet at a predetermined timing to a client and receives Echo_Reply from the client.

The packet check unit determines whether the communication apparatus has received an Echo_Request packet from the WAN side, and if determining that the communication apparatus has received the Echo_Request packet, sends back Echo_Reply corresponding to the received Echo_Request packet. With this arrangement, the communication apparatus can respond to an inquiry about whether a link has been established, from an access server in the PPP session stage. The communication apparatus can respond to an inquiry from a client.

The "communication apparatus" may be implemented as a portable telephone (or PHS) with a wireless LAN function, and a wireless LAN PC may be dial-up-connected via the portable telephone.

The present invention is not limited to the above-described embodiments, and can be variously modified without departing from the spirit and scope of the invention in practical use. The respective embodiments can be combined as properly as possible. In this case, the effects of the combination can be obtained. The embodiments include inventions on various stages, and various inventions can be extracted by an appropriate combination of building components disclosed. For example, when an invention is extracted by omitting several building components from all those described in the embodiments, the omission is properly compensated for by a well-known technique in practicing the extracted invention.

As has been described in detail above, the present invention can provide a communication apparatus with a dial-up function that can bridge-connect a client device to a WAN at an arbitrary timing with arbitrary settings (telephone number and the like) without changing router settings.

Also, the present invention can provide a communication apparatus with a dial-up function that can realize router connection and dial-up connection to the WAN by connecting a router and PC only via a LAN (Ethernet, wireless LAN, or the like).

## Claims

1. A communication apparatus with a dial-up function, **characterized by** comprising:
a first interface (102-1) which can connect a communication terminal;
a second interface (101) which is connected to a plurality of dial-up-connectable servers; and
connection means (103), when a connection request to a server connected to said second interface is received from the communication terminal connected to said first interface, configured to connect the communication terminal to the server at a connection request destination via said second interface on the basis of information representing the server at the connection request destination sent from the communication terminal.

2. An apparatus according to claim 1, **characterized by** further comprising conversion means for performing protocol conversion processing between a protocol in a FIRST connected to said first interface and a protocol in a WAN connected to said second interface.

3. An apparatus according to claim 2, **characterized in that** sad conversion means performs routing processing between a LAN connected to the first interface and a WAN connected to the second interface.

4. An apparatus according to claim 1, **characterized by** further comprising:
means for determining whether a first packet used to confirm that connection between the communication terminal and the server is not canceled is received; and
means for sending back, to a transmission source of the first packet, a second packet representing that connection between the communication terminal and the server is not canceled when said determination means determines that the first packet is received.

5. An apparatus according to claim 1, **characterized in that** said first interface includes a plurality of first interfaces, which further comprises routing means for performing routing processing between LANs connected to said plurality of first interfaces, and in which when information representing a connection request destination is received from the communication terminal during routing processing by said routing means, said connection means stops the routing processing and dial-up-connects the communication terminal to a server at a connection destination via said second interface.

6. An apparatus according to claim 1, **characterized in that** said first interface includes a plurality of first interfaces, which further comprises a third interface, and routing means for performing routing processing between LANs connected to said plurality of first interfaces, and routing processing between a WAN connected to said third interface and a LAN connected to said first interface, and in which when information representing a connection request destination is received from the communication terminal during routing processing by said routing means, said connection means connects the communication terminal to a server at a connection destination via said second interface.

7. A communication apparatus **characterized by** comprising:
a LAN interface;
a first WAN interface which is connected to a dial-up-connectable server; and
conversion means for performing protocol conversion processing between a protocol in a LAN connected to said LAN interface and a protocol in a WAN connected to said first WAN interface.

8. An apparatus according to claim 7,
**characterized in that** the protocol in the LAN includes PPP, and the protocol in the WAN includes PPPoE.

9. A communication method in a communication apparatus having a LAN interface, and a first WAN interface which is connected to a dial-up-connectable server, comprising:
receiving information representing a server at a connection request destination from a communication terminal connected to the LAN interface; and
dial-up-connecting the communication terminal to the server at the connection request destination via the first WAN interface on the basis of the received information representing the server at the connection request destination.

10. A method according to claim 9, **characterized in that** communication between the server and the communication terminal is achieved by performing protocol conversion processing between a protocol in a WAN connected to the first WAN interface and a protocol in a LAN connected to the LAN interface after connection between the server and the communication terminal is established.
